# EUROPEAN PATENT APPLICATION

(11) **EP 1 688 646 A1**
(43) Date of publication of application: **09.08.2006**
(21) Application number: 05002743.2
(22) Date of filing: 04.02.2005
(51) Int. Cl.: F16H 35/10, F16D 7/08

(54) **Overload protection mechanism for all terrain vehicles**

(71) Applicant: Kwang Yang Motor Co., Ltd., San-Min Dist., Kaohsiung City (TW)
(72) Inventor: Shao, Chien-Neng, Cambridge CB2 1FD (GB)
(74) Representative: Horak, Michael

(57) **Abstract**

A torque release mechanism for an all terrain vehicle which includes a driving disc (71) fixedly mounted on a rear axle (7) of the all terrain vehicle, the driving disc (71) having one side provided with a plurality of first cavities (711); a sprocket (72) mounted on the rear axle (7) and adjacent to the driving disc (71), the sprocket (72) having one side provided with a plurality of second cavities (722); a plurality of balls (B) fitted between the first and second cavities (711,722); a resilient member (74) mounted on the rear axle (7) and adjacent to the sprocket (72); and a locking member (75) fixedly mounted on the rear axle (7) and adjacent to the resilient member (74); whereby when the sprocket (72) is forced to move axially away from the driving disc (71), the resilient member (74) will be compressed thereby providing a space for the sprocket (72) to move out of engagement with the driving disc (71).

## Description

### BACKGROUND OF THE INVENTION

### 1. Field of the Invention

This invention is related to a torque release mechanism for all terrain vehicles and in particular to one which can protect a transmission chain of all terrain vehicles from being broken when the torque applied to the chain exceeds a predetermined value.

### 2. Description of the Prior Art

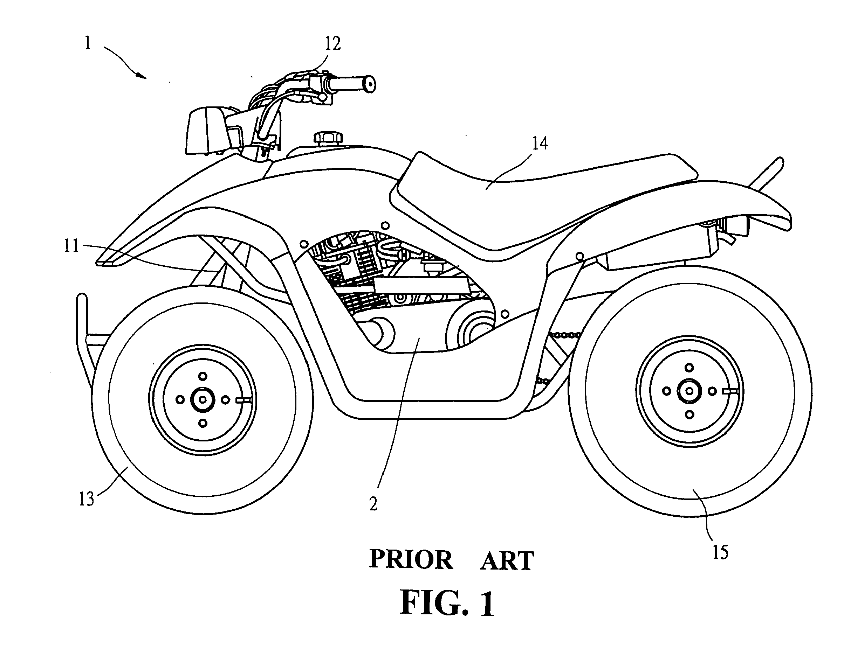

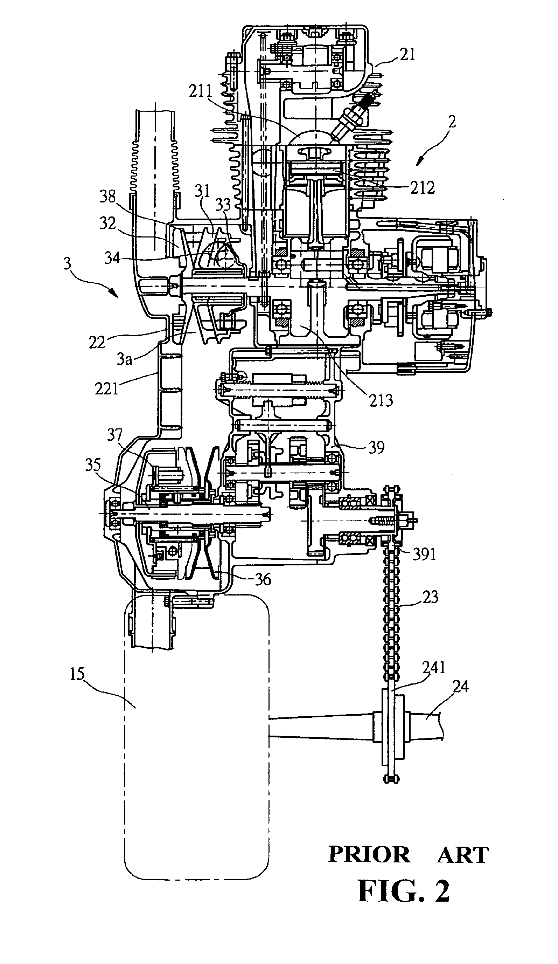

Referring to FIG 1, the conventional all terrain vehicle 1 according to the present invention includes a frame 11, a steering mechanism 12, front wheel 13, a seat 14, rear wheels 15, and a power unit 2. The front portion of the frame 11 is pivotally connected with the steering mechanism 12 under which are mounted the front wheels 13. The seat 14 is arranged behind the steering mechanism 12 and on the frame 11. The power unit 2 is installed under the seat 14. As shown in FIG 2, the power unit 2 includes an engine 21 and a stepless transmission 22 driven by the engine 21 and driving a rear axle 24 via a chain 23. The rear wheels 15 are drivingly connected with the rear axle 24.

As shown in FIG 2, the fuel is first mixed with fresh air and then transmitted to a combustion chamber 211 of the engine 21 to generate power thereby causing a piston 212 to reciprocate and therefore rotating a crankshaft 213. Then, the crankshaft 213 will drive the stepless transmission 22.

The stepless transmission 22 includes a belt transmission 3 arranged in a transmission case 221. The belt transmission 3 includes a movable disc 31 mounted on the crankshaft 213, a driving disc 32 arranged on the crankshaft and mounted on one side of the movable disc 31, an inclined plate 33 mounted on the crankshaft 213 and arranged the other side of the movable disc 31, a plurality of rolling balls 34 fitted between the movable disc 31 and the inclined plate 33, a driven shaft 35 for power transmission, driven discs 36 arranged on the driven shaft 35, a clutch 37 mounted on the driven shaft 35, a belt 38, a final gear set 39, and a final sprocket 391. The movable disc 31 and the driving disc 32 form a driving disc 3a of a belt transmission mechanism 3. The belt 38 has an end between the movable disc 31 and the driving disc 32 and the other end between the driven discs 36.

The engine 21 utilizes the power generated from the explosion to reciprocate the piston 212 thereby rotating the crankshaft 213. The driving disc 3a of the stepless transmission 22 will be rotated in unison with the crankshaft 213 thereby rotating the driven disc 36 to drive the driven shaft 35 via the clutch 37. The final gear set 39 will drive the final sprocket 391 which will in turn drive a driving toothed disc 241 on the rear axle 241 via the chain 23 thus turning the rear wheels to cause the all terrain vehicle to travel.

In order for the terrain vehicle 1 to accelerate forward or upwards at the moment of impact as it touches ground, the accelerator must be fully pressed to further increase the performance of the output torque of the engine. Due to the gravitational force and the function of the shock absorber, the chain 23 between the sprocket 391 and the driving toothed disc 241 will be in a tensioned condition. Furthermore, the engine will output larger power and torque when the accelerator is pressed, the chain 23 and the driving toothed disc 241 will be subject to a large torque thus probably pulling the chain 23 away the driving toothed disc 241. As a consequence, the chain 23 and the driving toothed disc will even be broken or damaged thereby seriously influencing the safety of the all terrain vehicle.

### SUMMARY OF THE INVENTON

This invention is related to a torque release mechanism for all terrain vehicles.

It is the primary object of the present invention to provide a torque release mechanism for an all terrain vehicle which includes a driving disc fixedly mounted on a rear axle of the all terrain vehicle, the driving disc having one side provided with a plurality of first cavities; a sprocket mounted on the rear axle and adjacent to the driving disc, the sprocket having one side provided with a plurality of second cavities; a plurality of balls fitted between the first and second cavities; a resilient member mounted on the rear axle and adjacent to the driving toothed disc; and a locking member fixedly mounted on the rear axle and adjacent to the resilient member; whereby when the sprocket is forced to move axially away from the driving disc, the resilient member will be compressed thereby providing a space for the sprocket to move out of engagement with the driving disc.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a side view of a prior art all terrain vehicle;
FIG 2 is a sectional view of a prior art transmission mechanism for all terrain vehicles;
FIG 3 is a sectional view of a transmission mechanism for all terrain vehicles according to the present invention;
FIG 4 is an exploded view of the torque release mechanism of the transmission mechanism according to the present invention;
FIG 4A illustrates a rear side of the driving toothed disc; and
FIGS. 5 and 6 illustrate the working principle of the torque release mechanism according to the present invention.

### DETAILED DESCRIPTION OF THE PREFERRED EMBODIMENT

For the purpose of promoting an understanding of the principles of the invention, reference will now be made to the embodiment illustrated in the drawings. Specific language will be used to describe same. It will, nevertheless, be understood that no limitation of the scope of the invention is thereby intended, alterations and further modifications in the illustrated device, and further applications of the principles of the invention as illustrated herein being contemplated as would normally occur to one skilled in the art to which the invention relates.

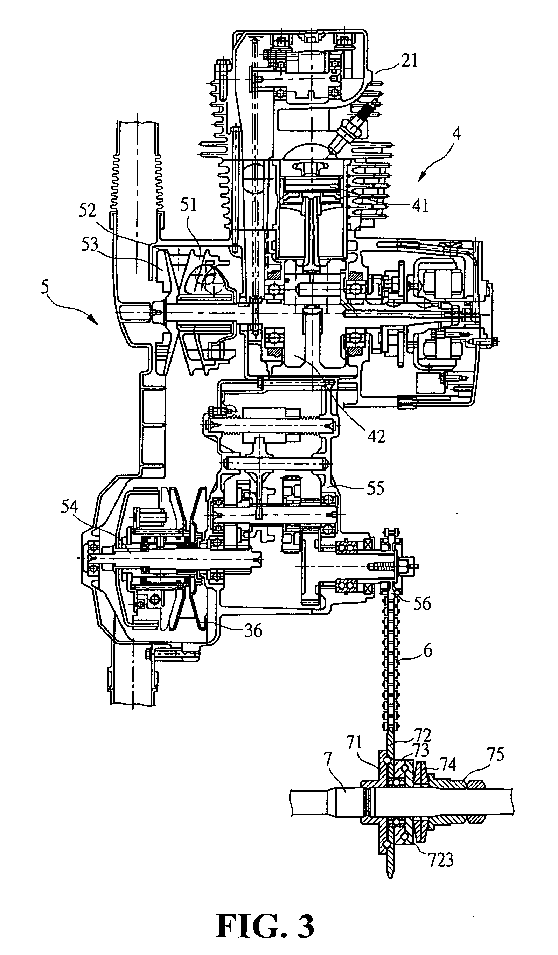

With reference to FIG 3, the transmission mechanism for all terrain vehicles according to the present invention mainly comprises an engine 4 and a stepless transmission 5.

The engine 4 utilizes the power generated by explosion to push a piston 41 to reciprocate, thereby driving a crankshaft 42 to rotate. Then, the crankshaft 42 will drive the stepless transmission 5 to rotate a driving disc 51 which will in turn drive a driven disc 53 via a belt 52. In the meantime, the driven disc 53 will drive a driven axle 54 which will in turn drive a final toothed disc 56 via a final gear set 55. The final toothed disc 56 will drive a sprocket 72 via a chain 6 engaged with a rear axle 7.

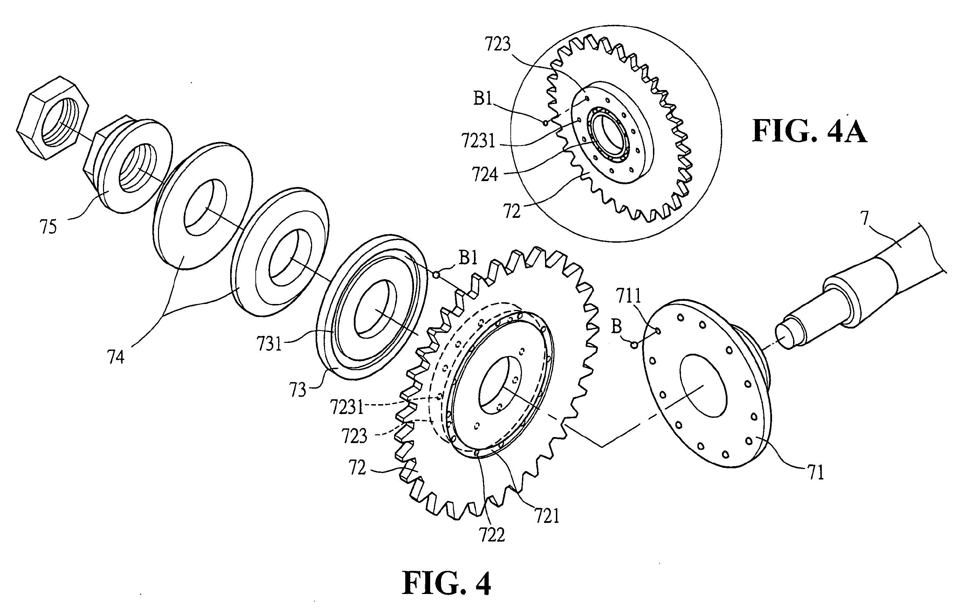

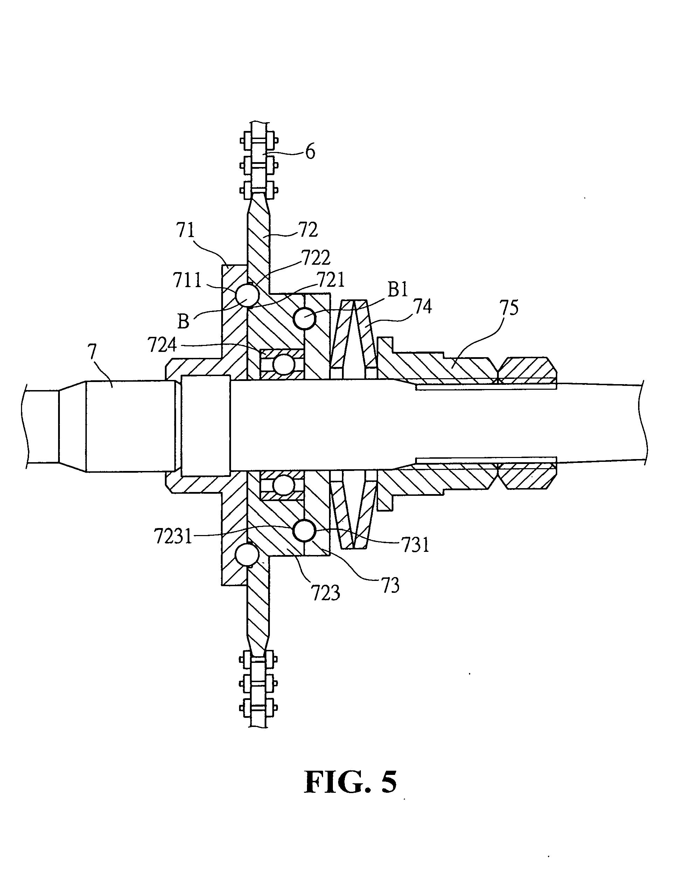

Referring to FIGS. 4 and 5, the rear axle 7 is provided with a driving disc 71 on which are sequentially mounted a sprocket 72, a wear plate 73, a resilient member 74 and a locking member 75. The locking member 75 is fixedly mounted the rear axle 7. The driving disc 71 is formed at a first side with a plurality of cavities 711 and mounted on the rear axle 7. The sprocket 72 is mounted on the rear axle 7 and positioned adjacent to the first side of the driving disc 71. The sprocket 72 is provided at the center with a bearing 724. The sprocket 72 has a first side formed with a circular groove 721 having a plurality of cavities 722 which are aligned with the cavities 711 of the driving disc 7 to receive a plurality of balls B. The other side of the sprocket 72 is provided with a protruded neck 723 having a plurality of cavities 7231. The wear plate 73 has a circular groove 731 aligned with the cavities 7231 so as to receive a plurality of balls B1. The resilient member 74 is mounted between the wear plate 73 and the locking member 75. The resilient member 74 may be a disc spring.

When the final toothed disc 56 drives the sprocket 72 via the chain 6, the sprocket 72 will drive the driving disc 71 by means of the balls B between the cavities 722 and 711 thereby driving the rear axle 7 to cause the vehicle to travel.

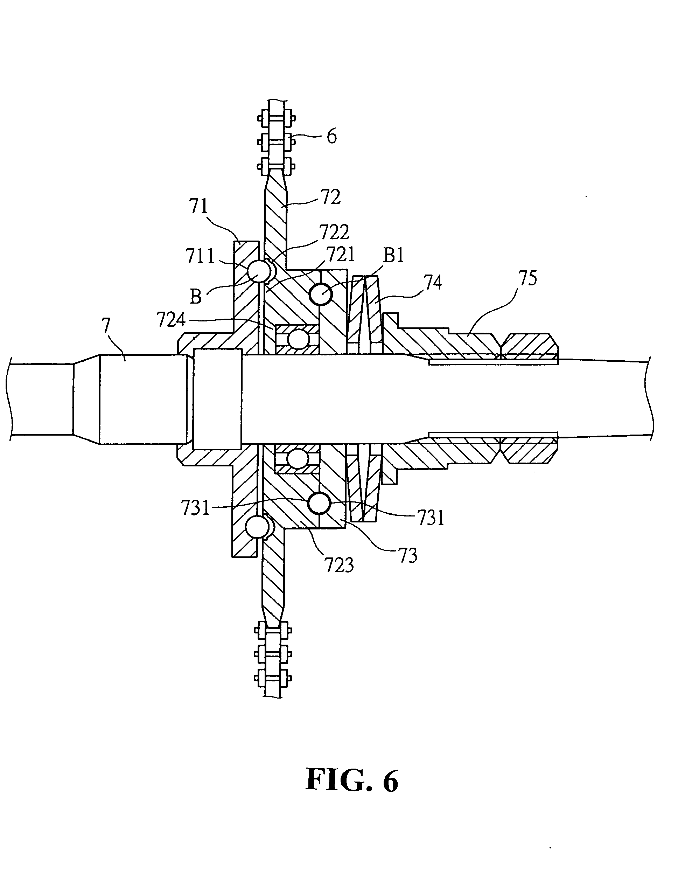

The present invention is characterized in that when the terrain vehicle is thrown up and down and accelerated to increase the performance of the engine as it touches the ground, the engine 4 and the stepless transmission 5 will output a large power and torque which will be transmitted to the final toothed disc 56 which will in turn drive the sprocket 72 via the chain 6. Referring to FIG 6, when the sprocket 72 is subject to a heavy weight or a large torque which exceeds the predetermined value, the balls B will move out of the cavities 722 into the circular groove 721 and have a portion retained in the cavities 711, thereby pushing against wear plate 73 and therefore compressing the resilient member 74. Meanwhile, the sprocket 72 will be disengaged from the driving disc 71 thus reducing loading to the sprocket 72. As a consequence, the chain 6 will be prevented from receiving a load or torque over a predetermined value thereby preventing the chain 6 from being pulled to extend its length or being broken and therefore also preventing the sprocket 72 from being damaged.

When the load or torque is reduced below a predetermined value, the resilient member 74 will push the wear plate 73 and the sprocket 72 back to their original positions, the balls B will be pushed back into the cavities 722 and the sprocket 72 will be able to drive the driving disc 71 via the balls B.

However, it should be noted that when the sprocket 72 is disengaged from the driving disc 71, the sprocket 72 will still be driven by the final toothed disc 56 to rotate at a high speed. By means of the balls B1, the sprocket 72 will be prevented to get in direct contact with the wear plate 73 and the resilient member 74 thereby preventing the sprocket 72 from wearing out.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A torque release mechanism for an all terrain vehicle comprising:
a driving disc fixedly mounted on a rear axle of said all terrain vehicle, said driving disc having one side provided with a plurality of first cavities;
a sprocket mounted on said rear axle and adjacent to said driving disc, said sprocket having one side provided with a plurality of second cavities;
a plurality of balls fitted between said first and second cavities;
a resilient member mounted on said rear axle and adjacent to said driving toothed disc; and
a locking member fixedly mounted on said rear axle and adjacent to said resilient member;
whereby when said sprocket is forced to move axially away from said driving disc, said resilient member will be compressed thereby providing a space for said sprocket to move out of engagement with said driving disc.

2. The torque release mechanism for an all terrain vehicle as claimed in claim 1, further comprising a wear plate mounted on said rear axle between said sprocket and said resilient member.

3. The torque release mechanism for an all terrain vehicle as claimed in claim 1, wherein said resilient member is a disc spring.
